# EUROPEAN PATENT SPECIFICATION

(11) **EP 0 340 655 B1**
(45) Date of publication and mention of the grant of the patent: **27.07.1994**
(21) Application number: 89107736.4
(22) Date of filing: 02.05.1989
(51) Int. Cl.: C08L 101/00, B29B 7/00, B29C 47/56, B29C 47/10

(54) **Compositions comprising thermally incompatible polymers**
Zusammensetzungen, welche thermisch inkompatible Polymere enthalten
Compositions contenant des polymères thermiquement incompatibles

(30) Priority: 02.05.1988 IT 2041688
(43) Date of publication of application: 08.11.1989
(73) Proprietor: HIMONT ITALIA S.r.l., I-20100 Milan (IT)
(72) Inventor: Federici, Carlo, I-San Donato Milanese (IT); Attalla, Giancarlo, I-28100 Novara (IT); Chapoy, Lawrence, PH.D.L., I-28040 Lesa Novara (IT)
(74) Representative: Beszédes, Stephan G., Dr.

(56) References cited:
- EP-A- 0 297 293
- DE-A- 3 417 316
- US-A- 4 272 312
- K. Stoeckhert "Kunststoff-Lexikon", 1981, page 523
- Comprehensive Polymer Science, 1989, vol. 6, page 492
- Encyclopedia of Chemical Technology, 1982, vol. 18, page 481

## Description

The present invention relates to a process for the preparation of a thermoplastic composition comprising thermally incompatible polymers and to the compositions obtainable by this process.

In the present description, two polymers A and B are considered as thermally incompatible if the temperature range within which the polymer A is processable in the molten state and the temperature range within which the polymer B is processable in the molten state are not overlapping one another.

As is quite known, when thermoplastic polymer mixtures are to be prepared, in order to obtain industrially applicable compositions, it is essential that the single components, besides a certain chemical-physical affinity, shall also have overlapping temperature ranges within which they will be processable in the molten state.

In fact, if these temperature ranges do not satisfy said conditions, there will be the risk that during the processing, some of the components of the mixture are thermally degraded or that part of the components of the mixture will be already melted while one part is still in the solid state and, thus, unprocessable.

In U.S. Patent 4,386,174, for example, there are described compositions that are processable in the molten state and which comprise at least one polymer capable of forming a molten anisotrope and at least one other thermoplastic polymer.

According to what described in that patent, the temperature range in which the first polymer forms a molten anisotrope, must be identical with that in which the thermoplastic polymer is processable in the molten state, or the two processability temperature ranges must be overlapping to one another by at least 5°C.

In the published European Patent Application 217,563, there are described self-reinforcing compositions comprising 80 to 98% by weight of a flexible-chain thermoplastic polymer, such as polycarbonate, and 2 to 20% by weight of a liquid-crystalline polymer (i.e. one capable of yielding a molten anisotrope) which will distribute itself in the matrix of the base polymer in the form of almost undirectionally oriented continuous fibres and with diameters comprised between 1 and 10 micrometers.

Also in the patent application it is evidenced that the processing temperature of the compositions must be such in which both polymers are processable in the molten state.

It has now been found by this Applicant that it is possible to prepare mixtures of thermally incompatible polymers by mixing together at least one previously melted polymer with a second colder molten polymer in a special way of feeding, particularly by operating with a suitable device.

As is known, in fact, when one wishes to improve certain characteristics of plastic materials having medium-low performances, one method that is applied is that of mixing these materials together with other polymers giving higher performances, in order to obtain mixes whose thermal and mechanical properties are intermediate with respect to those of the components and dependent on the composition.

In the case of polyolefins, such as polyethylene, polypropylene, etc., this technique is of a rather difficult application in as much as, in general, many of the modified materials have rather high processing temperatures which do not overlap those of these polymers.

Thus, an object of the present invention is that of providing a process for the preparation of a thermoplastic composition comprising mixtures of at least two thermoplastic thermally incompatible polymers A and B, polymer B having a processability temperature higher than that of polymer A.

The essential feature of the process according to the present invention comprises the combination of:
a) Feeding the polymer A into a first extruder and processing said polymer A in said first extruder thus melting said polymer A;
b) feeding the polymer B into a second extruder and processing said polymer B in said second extruder thus melting said polymer B; and
c) feeding the molten polymer B obtained from said second extruder into said first extruder at a distance from the outlet of said first extruder which doesn't exceed 15 screw diameters.

Thus the subject-matter of the present invention is a process for the preparation of a thermoplastic composition comprising a thermoplastic polymer A and a thermoplastic polymer B, said polymer A being selected from the group consisting of (co) polymers or olefins having general formula CH₂=CHR, wherein R is H or a C₁-C₆ alkyl radical, polystyrene, polystyrene modified with polar monomers, vinyl resins, ABS (acrylonitrile-butadiene-styrene) resins, AES (acrylonitrile-EPDM-styrene) resins, polyamides, acrylic and/or methacrylic resins, low molecular weight polycarbonates and a liquid-crystalline polyester having a structure in accordance with the general structure defined hereinafter for polymer B, said polymer B being a thermotropic liquid-crystalline polyester whereby the temperature range within which the polymer A is processable in the molten state and the temperature range within which the polymer B is processable in the molten state are not overlapping one another - the processability temperature of polymer B being higher than that of polymer A - obtained from a polycondensation reaction of aromatic and/or cycloaliphatic bicarboxylic acids with diphenols and/or with cycloaliphatic diols possibly in admixture with aromatic hydroxyacids, said process comprising the combination of:
a) feeding the polymer A into a first extruder and processing said polymer A in said first extruder thus melting said polymer A;
b) feeding the polymer B into a second extruder and processing said polymer B in said second extruder thus melting said polymer B; and
c) feeding the molten polymer B obtained from step b) into said first extruder in a position at a distance from the outlet thereof comprised between 1 and 15 screw diameters.

Examples of polymers A, i.e. polymers having relatively low processability temperatures, e.g. comprised between 100°C and 300°C, are the olefin polymers and copolymers, such as low-, medium- and high-density polyethylene, linear low-density polyethylene, polypropylene, ethylene/propylene copolymers, polybutene-1, poly-4-methyl-1-pentene, polystyrene, high impact polystyrene, polystyrene modified with polar monomers such as acrylonitrile, the vinyl resins such as polyvinylchloride.

Polymer B has a relatively high processability temperature, for instance greater than 200°C, in particular comprised between 250°C and 450°C. As already indicated, the processability temperature of polymer B is higher than that of polymer A. Examples of polymer B are polyethyleneterephthalate or polybutyleneterephthalate.

Particularly considered in the present invention as polymers B having relatively high processability temperatures, are those thermotropic liquid-crystalline polyesters capable of maintaining their properties in the melted state also after undercooling, such as for instance those capable of giving an optically anisotropic melt. These polymers are in fact capable of withstanding an undercooling thus remaining in the molten state even at temperatures below their melting temperature.

Examples of such polymers are the polyesters obtained by the polycondensation reaction of aromatic and/or cycloaliphatic bicarboxylic acids with aromatic and/or cycloaliphatic diols, optionally in admixture with aromatic hydroxyacids of which preferably at least 80% have functional groups in such a position as to form polymeric chains with either substantially coaxial or parallel directions. The polymers have processability temperatures which, though depending on their molecular weight, in general are greater than 250°C and in many cases are comprised between 300° and 400°C.

Examples of bicarboxylic acids used in the preparation of these polyesters are: terephthalic acid; chloro-terephthalic acid; methyl-terephthalic acid; 1,4- or 1,5- or 2,6-naphthalenedicarboxylic acid; 4,4'-diphenyldicarboxylic acid; 3,3'-dibromo-4,4'-diphenyldicarboxylic acid; 4,4'-stilbenedicarboxylic acid; cyclohexanedicarboxylic acid.

Examples of cycloaliphatic diphenols and/or diols are: Hydroquinone, hydroquinone substituted with halogens or with alkyl-, cycloalkyl-, aryl radicals with 1 to 10 carbon atoms or aralkyl radicals with from 7 to 15 carbon atoms such as chloro- or bromo-hydroquinone; (1-phenylethyl)hydroquinone; 2,5-bis(phenylethyl)hydroquinone; 2-(alpha-phenylisopropyl)hydroquinone; 4,4'-dihydroxydiphenyl, possibly substituted in position 3 and/or 3' with halogens and/or alkyl radicals, cycloalkyl radicals, aryl radicals, aralkyl radicals with from 1 to 15 carbon atoms, 2,6-dihydroxynaphthalene, 4,4'-dihydroxy-bicyclohexyl.

Examples of aromatic hydroxy acids are: p-hydroxy-benzoic acid; 3-chloro-4-hydroxybenzoic acid; 3-bromo-4-hydroxy-benzoicacid, 3-t-butyl-4-hydroxybenzoic acid; 6-hydroxy-2-naphthoic acid; 4-hydroxy-1-naphthoic acid; p-(4-hydroxyphenyl)benzoic acid; 4-hydroxy-1-naphthoic acid; p-(4-hydroxydiphenyl)benzoic acid.

Thermotropic liquid-crystalline polyesters, such as those containing the above mentioned monomeric units, are described for instance in U.S. Patents Nos. 3,637,595; 3,759,870; 3,975,487; 4,447,593; 4,468,364 und 4,600,765.

The above mentioned subdivision must be taken as being of a merely indicative character since for the realization of the process object of this invention, there may be also used polymers belonging to only one of the two groups, provided that there are given the conditions previously herein above described.

The processability temperature of a polymer depends, amongst others, also on its molecular weight.

The extruders which can be used in the process object of the present invention are of the type commonly used in the processing of plastic materials. Examples of such equipments are the single-screw, double-screw and tandem-extruders, in general characterized by a length/diameter (L/D) ratio of the screws greater than 10 and preferably comprised between 20 and 30.

The thermoplastic polymer of relatively high processability temperatures can be fed from the second extruder into the first extruder through a connecting union provided with heating means capable of keeping the temperature of the polymer within its processability temperature range.

In order to improve the dispersion of the two polymers, the first extruder may be provided, downstream of the point of introduction of the high-temperature polymer, with mixing devices such as: "static mixers", fluted sections and interrupted threads.

The composition of the mixture is determined by adjusting the flow rates which may be varied through suitable designs of the extruding screws, or simply by just varying the rotating speed of the screws themselves.

In the case of a plurality of extruders treating a plurality of polymers with relatively high processability temperatures, the introduction points of the first extruder may be positioned either all at the same distance from the extrusion outlet of the latter or at least some of said points may be positioned at different distances.

A subject-matter of the invention is also a thermoplastic composition obtainable by the process according to the invention, said thermoplastic composition comprising 1 to 99% by weight of the thermoplastic polymer A and 99 to 1% by weight of the thermoplastic liquid-crystalline polyester B.

Preferably, the polymeric composition of the present invention comprises from 50% to 99% by weight of polymer (A) and from 1 to 50% by weight of polymer (B), but even more preferably from 50% to 88% by weight of polymer (A) and from 12% to 50% by weight of polymer (B).

In the latter case, the present mixture, in general, will consist of a self-reinforced composite whose polymeric base (A) is the matrix while the liquid-crystalline polymer (B) will be the reinforcement in the form of continuous and stretched fibres having an essentially unidirectional orientation in the direction of the extrusion.

A preferred thermoplastic composition obtainable by the process according to the present invention is such comprising 50 to 99% by weight of the thermoplastic polymer A and 1 to 50% by weight of the thermoplastic liquid-crystalline polyester B and consisting of a self-reinforced composite, wherein the polymer B is dispersed as reinforcing component in a matrix of the polymer A and wherein the polymer B is in the form of continuous stretched fibres having an essentially unidirectional orientation in the sense of the extrusion.

The fibres, which have diameters below 20 micrometers, generally comprised between 1 and 10 micrometers, consist of a material highly oriented by the effect of the elongational deformations and of the shearing stresses suffered by the liquid-crystalline polymer at the outlet of the first extruder. Consequently they show considerably high mechanical properties and this, together with the fact that the fibres generally turn out to be continuous, imparts to them a highly reinforcing capacity.

The polymeric mixtures, obtained by means of the process object of the present invention, may successively be processed (transformed) by means of standard processing techniques used for plastic materials as for example: by extrusion molding, injection molding; and heat-forming, at the processing temperature of the low-melt point polymer.

In the case of self-reinforced polymeric mixtures, these latter may be used alternatively to compositions containing the same polymeric matrix and an inorganic reinforcement such as glass fibres. More particularly, the self-reinforced compositions, object of the present invention, may be used for the same application as those of the thermoplastic compounds reinforced with long fibres and having as a thermoplastic matrix the same basic polymer.

As already indicated, the extruders are of the type commonly used in the transformation of plastic materials, such as single-screw, double screw and tandem extruders; while for the connection of the extruders there are preferably used junctions fitted with heating means.

At the outlet of the first extruder, in which is treated the polymer having relatively low processing temperatures, there may possibly be fitted extrusion heads suited for producing finished manufactured articles such as fibres, films, tubular films, plates and sheets, extruded or drawn sections, pipes.

The structural and functional characteristics of the device used to put into practice the present invention, may be more clearly comprehended through the following detailed description which shows a preferred embodiment of the present invention.

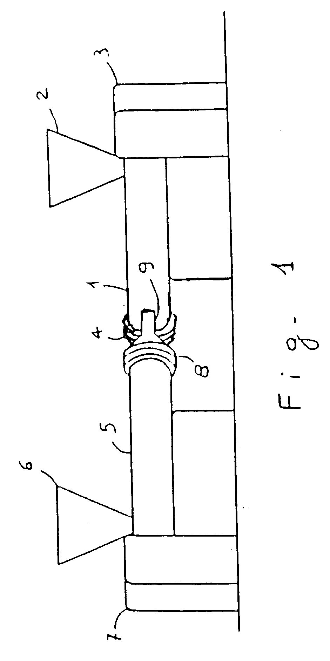

With reference to the attached figure 1, which represents a perspective view, a preferred device according to the present invention comprises:
a first extruder (1), suited for the treatment of a relatively low processability temperature polymer, said extruder being provided with a loading hopper (2), a motor/control board unit (3) and an extruding head (4); a second extruder (5) for the treatment of a polymer of relatively high processability temperatures, fitted with a loading hopper (6), a motor/control board unit (7) and an extrusion head (8); a nozzle (9) connecting the second extruder (5) to the first extruder (1) near the latter's outlet end.

In order to still better understand the present invention and for allowing its practical realization, in the following are given a number of illustrative examples.

### EXAMPLE 1

One operates with the device shown in figure (1), using two extruders with screws diameters (D) equal to 19 mm and a L/D (length/diameter) ratio equal to 25.

The extruding nozzle (9) of the second extruder (5) inserts itself into the first extruder (1) at a distance from extrusion head (4) of this latter, of 10 diameters.

Into the first extruder (1) is fed Moplen® FLF 20 type propylene powder, produced by Himont Incorporated, at a screw speed or 62 rpm.

Into the second extruder (5) is fed a thermotropic liquid-crystalline polyester of the Vectra® A-950 type, produced by Celanese Research Company, at a screw speed of 16 r.p.m..

The polypropylene is processed in a temperature range from 200 to 260°C while the polyester is processed in a temperature range from 290 to 310°C.

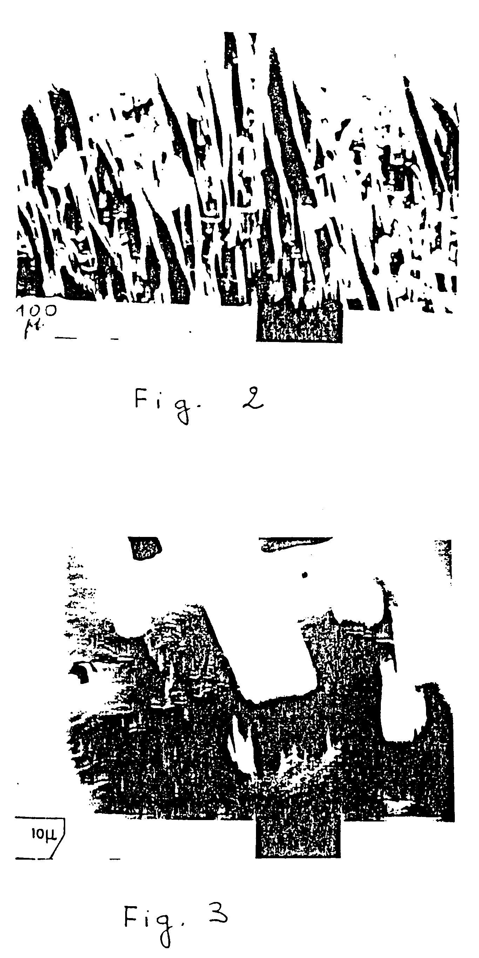

Thereby there is obtained a self-reinforced polypropylene containing about 20% by weight of fully fibrilled polyester, as illustrated in photographs of Figs. 2 and 3.

The mechanical properties of the polymeric mixture produced are reported by the following table and are compared with the properties of the polypropylene as such.

**TABLE**

| | Standard ASTM | MOPLEN FLF 20 | MOPLEN FLF 20 and polyester |
|---|---|---|---|
| Breaking load (kg/cm²) | D638 | 350 | 1,100 |
| Modulus (kg/cm²) | D638 | 14,000 | 50,000 |
| Elongation Yielding coefficient (%) | D638 | 10 | 4 |

### EXAMPLE 2

It was proceeded using the same device and procedures used in Example 1, except for varying the polymers which were respectively:
a polypropylene of the type MOPLEN S30S by HIMONT INCORPORATED, having a processability temperature range of 220°-280°C, and a thermotropic aromatic liquid-crystalline polyester containing units derived from terephtalic acid and from a 1/1 in mols mixture of phenylhydroquinone and (1-phenylethyl)hydroquinone, whose preparation is described in U.S. Patent 4,600,765, and which has a processability temperature range of from 330°C to 360°C.

There was obtained a self-reinforced polypropylene containing about 20% by weight of a fully fibrilled polyester.

### EXAMPLE 3

It was proceeded using the device and following the procedures used in example 2, except that the polypropylene was substituted by Makrolon® 2800, which is a low molecular weight polycarbonate produced by BAYER Company and having a processability temperature range comprised between 260° and 300°C.

There was obtained a self-reinforced polycarbonate containing 20% by weight of fully fibrilled polyester.

## Claims (Claims for the following Contracting State(s): AT, BE, CH, DE, FR, IT, LI, LU, NL, SE)

1. A process for the preparation of a thermoplastic composition comprising a thermoplastic polymer A and a thermoplastic polymer B, said polymer A being selected from the group consisting of (co)polymers of olefins having general formula CH₂=CHR, wherein R is H or a C₁-C₆ alkyl radical, polystyrene modified with polar monomers, vinyl resins, ABS (acrylonitrile-butadiene-styrene) resins, AES (acrylonitrile-EPDM-styrene) resins, polyamides, acrylic and/or methacrylic resins, low molecular weight polycarbonates and a liquid-crystalline polyester having a structure in accordance with the general structure defined hereinafter for polymer B, said polymer B being a thermotropic liquid-crystalline polyester whereby the temperature range within which the polymer A is processable in the molten state and the temperature range within which the polymer B is processable in the molten state are not overlapping one another - the processability temperature or polymer B being higher than that or polymer A - obtained from a polycondensation reaction of aromatic and/or cycloaliphatic bicarboxylic acids with diphenols and/or with cycloaliphatic diols possibly in admixture with aromatic hydroxyacids, said process comprising the combination of:
a) feeding the polymer A into a first extruder and processing said polymer A in said first extruder thus melting said polymer A;
b) feeding the polymer B into a second extruder and processing said polymer B in said second extruder thus melting said polymer B; and
c) feeding the molten polymer B obtained from step b) into said first extruder in a position at a distance from the outlet thereof comprised between 1 and 15 screw diameters.

2. The process of claim 1, wherein the thermotropic liquid-crystalline polyester B has a processability temperature of greater than 250°C.

3. The process of claim 1, wherein the thermoplastic polymer B is fed from the second extruder into the first extruder through a connecting junction provided with heating means.

4. A thermoplastic composition obtainable by the process of any of the preceding claims 1 to 3, said thermoplastic composition comprising 1 to 99% by weight of the thermoplastic polymer A and 99 to 1% by weight of the thermoplastic liquid-crystalline polyester B.

5. A thermoplastic composition obtainable by the process of any of the preceding claims 1 to 3, said thermoplastic composition comprising 50 to 99% by weight of the thermoplastic polymer A and 1 to 50% by weight of the thermoplastic liquid-crystalline polyester B and consisting of a self-reinforced composite, wherein the polymer B is dispersed as reinforcing component in a matrix of the polymer A and wherein the polymer B is in the form of continuous stretched fibres having an essentially unidirectional orientation in the sense of the extrusion.

## Claims (Claims for the following Contracting State(s): ES)

1. A process for the preparation of a thermoplastic composition comprising a thermoplastic polymer A and a thermoplastic polymer B, said polymer A being selected from the group consisting of (co)polymers of olefins having general formula CH₂=CHR, wherein R is H or a C₁-C₆ alkyl radical, polystyrene modified with polar monomers, vinyl resins, ABS (acrylonitrile-butadiene-styrene) resins, AES (acrylonitrile-EPDM-styrene) resins, polyamides, acrylic and/or methacrylic resins, low molecular weight polycarbonates and a liquid-crystalline polyester having a structure in accordance with the general structure defined hereinafter for polymer B, said polymer B being a thermotropic liquid-crystalline polyester whereby the temperature range within which the polymer A is processable in the molten state and the temperature range within which the polymer B is processable in the molten state are not overlapping one another - the processability temperature of polymer B being higher than that of polymer A - obtained from a polycondensation reaction of aromatic and/or cycloaliphatic bicarboxylic acids with diphenols and/or with cycloaliphatic diols possibly in admixture with aromatic hydroxyacids, said process comprising the combination of:
a) feeding the polymer A into a first extruder and processing said polymer A in said first extruder thus melting said polymer A;
b) feeding the polymer B into a second extruder and processing said polymer B in said second extruder thus melting said polymer B; and
c) feeding the molten polymer B obtained from step b) into said first extruder in a position at a distance from the outlet thereof comprised between 1 and 15 screw diameters.

2. The process of claim 1, wherein the thermotropic liquid-crystalline polyester B has a processability temperature of greater than 250°C.

3. The process of claim 1, wherein the thermoplastic polymer B is fed from the second extruder into the first extruder through a connecting junction provided with heating means.

4. The process of any of preceding claims 1 to 3 for preparing the thermoplastic composition comprising 1 to 99% by weight of the thermoplastic polymer A and 99 to 1% by weight of the thermoplastic liquid-crystalline polyester B.

5. The process of any of preceding claims 1 to 3 for preparing the thermoplastic composition comprising 50 to 99% by weight of the thermoplastic polymer A and 1 to 50% by weight of the thermoplastic liquid-crystalline polyester B and consisting of a self-reinforced composite, wherein the polymer B is dispersed as reinforcing component in a matrix of the polymer A and wherein the polymer B is in the form of continuous stretched fibres having an essentially unidirectional orientation in the sense of the extrusion.

## Patentansprüche (Patentansprüche für folgende(n) Vertragsstaat(en): AT, BE, CH, DE, FR, IT, LI, LU, NL, SE)

1. Verfahren zur Herstellung einer thermoplastischen Zusammensetzung, umfassend ein thermoplastisches Polymer A und ein thermoplastisches Polymer B, wobei das Polymer A aus der Gruppe ausgewählt ist, bestehend aus (Co-) Polymeren von Olefinen, welche die allgemeine Formel CH₂=CHR haben, worin R H oder ein C₁-C₆-Alkylrest ist, mit polaren Monomeren modifiziertes Polystyrol, Vinylharzen, ABS (Acrylnitril-Butadien-Styrol)-Harzen, AES (Acrylnitril-EPDM-Styrol)-Harzen, Polyamiden, Acryl- und/oder Methacrylharzen, niedermolekulargewichtigen Polycarbonaten und einem flüssig-kristallinen Polyester, der eine Struktur gemäß der allgemeinen Struktur, welche hier im folgenden für Polymer B definiert ist, besitzt, wobei das Polymer B ein thermotroper flüssig-kristalliner Polyester ist, wobei der Temperaturbereich, innerhalb dem das Polymer A im geschmolzenen Zustand verarbeitbar ist und der Temperaturbereich, innerhalb dem das Polymer B im geschmolzenen Zustand verarbeitbar ist, sich nicht gegenseitig überlappen - die Verarbeitungstemperatur von Polymer B ist höher als die von Polymer A -, erhältlich durch eine Polykondensationsreaktion von aromatischen und/oder cycloaliphatischen Bicarbonsäuren mit Diphenolen und/oder mit cycloaliphatischen Diolen, möglicherweise unter Einmischung von aromatischen Hydroxysäuren, wobei das Verfahren die folgende Kombination umfaßt:
a) Eingeben des Polymers A in einen ersten Extruder und Verarbeiten des Polymers A in dem ersten Extruder, so daß das Polymer A schmilzt;
b) Eingeben des Polymers B in einen zweiten Extruder und Verarbeiten des Polymers B im zweiten Extruder, so daß Polymer B schmilzt;
und
c) Eingeben des aus Stufe b) erhaltenen geschmolzenen Polymers B in den ersten Extruder in einer Position mit einem Abstand zur Auslaßöffnung davon, der zwischen 1 und 15 Schneckendurchmesser liegt.

2. Verfahren nach Anspruch 1, worin der thermotrope flüssig-kristalline Polyester B eine Verarbeitungstemperatur von mehr als 250°C hat.

3. Verfahren nach Anspruch 1, worin das thermoplastische Polymer B aus dem zweiten. Extruder durch einen verbindenden Durchgang, der mit einer Heizvorrichtung ausgestattet ist, in den ersten Extruder eingegeben wird.

4. Thermoplastische Zusammensetzung, erhältlich durch das Verfahren von mindestens einem der vorhergehenden Ansprüche 1 bis 3, wobei die thermoplastische Zusammensetzung 1 bis 99 Gew.-% thermoplastisches Polymer A und 99 bis 1 Gew.-% thermoplastischen flüssig-kristallinen Polyester B umfaßt.

5. Thermoplastische Zusammensetzung, erhältlich durch das Verfahren von mindestens einem der vorhergehenden Ansprüche 1 bis 3, wobei die thermoplastische Zusammensetzung 50 bis 99 Gew.-% thermoplastisches Polymer A und 1 bis 50 Gew.-% thermoplastischen flüssig-kristallinen Polyester B umfaßt, und aus einem selbstverstärkten Verbund besteht, worin das Polymer B als verstärkende Komponente in einer Matrix des Polymers A dispergiert ist und worin das Polymer B in Form von kontinuierlich gestreckten Fasern, die eine im wesentlichen unidirektionale Orientierung bezüglich der Extrusion haben, voliegt.

## Patentansprüche (Patentansprüche für folgende(n) Vertragsstaat(en): ES)

1. Verfahren zur Herstellung einer thermoplastischen Zusammensetzung, umfassend ein thermoplastisches Polymer A und ein thermoplastisches Polymer B, wobei das Polymer A aus der Gruppe ausgewählt ist, bestehend aus (Co-) Polymeren von Olefinen, welche die allgemeine Formel CH₂=CHR haben, worin R H oder ein C₁-C₆-Alkylrest ist, mit polaren Monomeren modifiziertes Polystyrol, Vinylharzen, ABS (Acrylnitril-Butadien-Styrol)-Harzen, AES (Acrylnitril-EPDM-Styrol)-Harzen, Polyamiden, Acryl- und/oder Methacrylharzen, niedermolekulargewichtigen Polycarbonaten und einem flüssig-kristallinen Polyester, der eine Struktur gemäß der allgemeinen Struktur, welche hier im folgenden für Polymer B definiert ist, besitzt, wobei das Polymer B ein thermotroper flüssig-kristalliner Polyester ist, wobei der Temperaturbereich, innerhalb dem das Polymer A im geschmolzenen Zustand verarbeitbar ist und der Temperaturbereich, innerhalb dem das Polymer B im geschmolzenen Zustand verarbeitbar ist, sich nicht gegenseitig überlappen - die Verarbeitungstemperatur von Polymer B ist höher als die von Polymer A -, erhältlich durch eine Polykondensationsreaktion von aromatischen und/oder cycloaliphatischen Bicarbonsäuren mit Diphenolen und/oder mit cycloaliphatischen Diolen, möglicherweise unter Einmischung von aromatischen Hydroxysäuren, wobei das Verfahren die folgende Kombination umfaßt:
a) Eingeben des Polymers A in einen ersten Extruder und Verarbeiten des Polymers A in dem ersten Extruder, so daß das Polymer A schmilzt;
b) Eingeben des Polymers B in einen zweiten Extruder und Verarbeiten des Polymers B im zweiten Extruder, so daß Polymer B schmilzt;
und
c) Eingeben des aus Stufe b) erhaltenen geschmolzenen Polymers B in den ersten Extruder in einer Position mit einem Abstand zur Auslaßöffnung davon, der zwischen 1 und 15 Schneckendurchmesser liegt.

2. Verfahren nach Anspruch 1, worin der thermotrope flüssig-kristalline Polyester B eine Verarbeitungstemperatur von mehr als 250°C hat.

3. Verfahren nach Anspruch 1, worin das thermoplastische Polymer B aus dem zweiten Extruder durch einen verbindenden Durchgang, der mit einer Heizvorrichtung ausgestattet ist, in den ersten Extruder eingegeben wird.

4. Verfahren nach mindestens einem der vorhergehenden Ansprüche 1 bis 3 zur Herstellung der thermoplastischen Zusammensetzung, die 1 bis 99 Gew.-% thermoplatisches Polymer A und 99 bis 1 Gew.-% thermoplastischen flüssigkristallinen Polyester B umfaßt.

5. Verfahren nach mindestens einem der vorhergehenden Ansprüche 1 bis 3 zur Herstellung der thermoplastischen Zusammensetzung, die 50 bis 99 Gew.-% thermoplastisches Polymer A und 1 bis 50 Gew.-% thermoplastischen flüssigkriställinen Polyester B umfaßt, und aus einem selbstverstärkten Verbund besteht, worin das Polymer B als verstärkende Komponente in einer Matrix des Polymers A dispergiert ist und worin das Polymer B in Form von kontinuierlich gestreckten Fasern, die eine im wesentlichen unidirektionale Orientierung bezüglich der Extrusion haben, voliegt.

## Revendications (Revendications pour l'(les) Etat(s) contractant(s) suivant(s): AT, BE, CH, DE, FR, IT, LI, LU, NL, SE)

1. Un procédé de préparation d'une composition thermoplastique comprenant un polymère thermoplastique (A) et un polymère thermoplastique (B), ce polymère (A) étant choisi dans le groupe constitué par des (co)-polymères d'oléfines répondant a la formule générale CH₂=CHR, dans laquelle R représente H ou un radical alkyle en C₁ à C₆, polystyrène, polystyrène modifié par des monomères polaires, résines vinyliques, résines d'ABS (acrylonitrile-butadiène-styrène), résines d'AES (acrylonitrile-EPDM-styrène), polyamides, résines acryliques et/ou méthacryliques, polycarbonates de bas poids moléculaire et un polyester liquide-cristallin dont la structure est en accord avec la structure générale définie ci-après pour le polymère (B), ce polymère (B) étant un polyester liquide-cristallin thermotrope, l'intervalle de température à l'intérieur duquel on peut traiter le polymère (A) à l'état fondu et l'intervalle de température à l'intérieur duquel on peut traiter le polymère (B) à l'état fondu ne se recouvrant pas l'un l'autre - la température à laquelle on peut traiter le polymère (B) étant supérieure à celle à laquelle on peut traiter le polymère (A) - obtenu par une réaction de polycondensation d'acides bicarboxylique, aromatique et/ou cycloaliphatique avec des diphénols et/ou des diols cycloaliphatiques, éventuellement en mélange avec de l'hydroxyacide aromatique, ce procédé comprenant en association les étapes suivantes:
a) on introduit le polymère (A) dans une première extrudeuse et on traite ce polymère (A) dans cette première extrudeuse, pour faire ainsi fondre ce polymère (A);
b) on introduit le polymère (B) dans une seconde extrudeuse et on traite ce polymère (B) dans cette seconde extrudeuse, pour faire ainsi fondre ce polymère (B); et
c) on introduit le polymère (B) fondu obtenu dans l'étape b) dans cette première extrudeuse dans une position se trouvant à une distance de la sortie de cette extrudeuse comprise entre 1 et 15 diamètres de vis.

2. Le procédé selon la revendication 1, caractérisé en ce que la température à laquelle on peut traiter le polyester B liquide-cristallin thermotrope est supérieure à 250°C.

3. Le procédé selon la revendication 1, caractérisé en ce que le polymère thermoplastique (B) est introduit de la seconde dans la première extrudeuse à travers un raccord de connexion pourvu de moyens de chauffage.

4. Une composition thermoplastique pouvant être obtenue par le procédé selon l'une quelconque des revendications précédentes 1 à 3, cette composition thermoplastique comprenant de 1 à 99% en poids du polymère thermoplastique (A) et de 99 à 1% en poids du polyester thermoplastique liquide-cristallin (B).

5. Une composition thermoplastique pouvant être obtenue par le procédé selon l'une quelconque des revendications précédentes 1 à 3, cette composition thermoplastique comprenant de 50 à 99% en poids du polymère thermoplastique (A) et de 1 à 50% en poids du polyester thermoplastique liquide-cristallin (B) et étant constitué d'un matériau composite auto-renforcé, dans lequel le polymère (B) est dispersé comme composant de renforcement dans une matrice du polymère (A) et dans lequel le polymère (B) se trouve sous la forme de fibres étirées continues présentant une orientation sensiblement unidirectionnelle dans le sens de l'extrusion.

## Revendications (Revendications pour l'(les) Etat(s) contractant(s) suivant(s): ES)

1. Un procédé de préparation d'une composition thermoplastique comprenant un polymère thermoplastique (A) et un polymère thermoplastique (B), ce polymère (A) étant choisi dans le groupe constitué par des (co)-polymères d'oléfines répondant à la formule générale CH₂=CHR, dans laquelle R représente H ou un radical alkyle en C₁ à C₆, polystyrène, polystyrène modifié par des monomères polaires, résines vinyliques, résines d'ABS (acrylonitrile-butadiène-styrène), résines d'AES (acrylonitrile-EPDM-styrène), polyamides, résines acryliques et/ou méthacryliques, polycarbonates de bas poids moléculaire et un polyester liquide-cristallin dont la structure est en accord avec la structure générale définie ci-après pour le polymère (B), ce polymère (B) étant un polyester liquide-cristallin thermotrope, l'intervalle de température à l'intérieur duquel on peut traiter le polymère (A) à l'état fondu et l'intervalle de température à l'intérieur duquel on peut traiter le polymère (B) à l'état fondu ne se recouvrant pas l'un l'autre - la température à laquelle on peut traiter le polymère (B) étant supérieure à celle à laquelle on peut traiter le polymère (A) - obtenu par une réaction de polycondensation d'acides bicarboxylique, aromatique et/ou cycloaliphatique avec des diphénols et/ou des diols cycloaliphatiques, éventuellement en mélange avec de l'hydroxyacide aromatique, ce procédé comprenant en association les étapes suivantes:
a) on introduit le polymère (A) dans une première extrudeuse et on traite ce polymère (A) dans cette première extrudeuse, pour faire ainsi fondre ce polymère (A);
b) on introduit le polymère (B) dans une seconde extrudeuse et on traite ce polymère (B) dans cette seconde extrudeuse, pour faire ainsi fondre ce polymère (B); et
c) on introduit le polymère (B) fondu obtenu dans l'étape b) dans cette première extrudeuse dans une position se trouvant à une distance de la sortie de cette extrudeuse comprise entre 1 et 15 diamètres de vis.

2. Le procédé selon la revendication 1, caractérisé en ce que la température à laquelle on peut traiter le polyester B liquide-cristallin thermotrope est supérieure à 250°C.

3. Le procédé selon la revendication 1, caractérisé en ce que le polymère thermoplastique (B) est introduit de la seconde dans la première extrudeuse à travers un raccord de connexion pourvu de moyens de chauffage.

4. Le procédé selon l'une quelconque des revendications précédentes 1 à 3, pour la préparation de la composition thermoplastique comportant 1 à 99 % en poids du polymère thermoplastique A, et 99 à 1 % en poids du polyester thermoplastique liquide-cristallin B.

5. Le procédé selon l'une quelconque des revendications précédentes 1 à 3, pour la préparation de la composition thermoplastique comportant 50 à 99 % en poids du polymère thermoplastique A, et 1 à 50 % en poids du polyester thermoplastique liquide-cristallin B, et étant constitué d'un composite auto-renforcé, dans lequel le polymère B est dispersé comme composant de renforcement dans une matrice du polymère A et dans lequel le polymère B se trouve sous la forme de fibres étirées continues présentant une orientation sensiblement unidirectionnelle dans le sens de l'extrusion.
